# EUROPEAN PATENT APPLICATION

(11) **EP 4 527 184 A1**
(43) Date of publication of application: **26.03.2025**
(21) Application number: 23315363.4
(22) Date of filing: 21.09.2023
(51) Int. Cl.: A01D 46/28

(54) **HARVESTING UNIT COMPRISING CROP COLLECTING MATS**

(71) Applicant: CNH Industrial France, 91150 Morigny-Champigny (FR)
(72) Inventor: METAYER, Raphaël, 91150 Morigny-Champigny (FR); LE BRECH, Laurent, 91150 Morigny-Champigny (FR); PAQUEREAU, Cyrille, 91150 Morigny-Champigny (FR); BELETEAU, David, 91150 Morigny-Champigny (FR)
(74) Representative: CNH Industrial IP Department

(57) **Abstract**

The invention concerns a harvesting unit including two shaker devices, and two collecting mats (14) disposed under respectively one shaker device, each being formed by a longitudinal alignment of collecting modules (16) that longitudinally overlap on one another, and transversely overlapping on, one another at their inward edges to form therebetween a path (17) for the passage of the trunks of the plants, each collecting module (16) comprising a collecting member (18) that presents an upper wall (19) forming a part of the corresponding mat (14and is arranged to move away from the path (17) upon bearing contact with a trunk, each collecting module (16) further comprising a reinforcing member (20) of the upper wall (19) against deformations thereof along a direction normal to said upper wall, said reinforcing member being arranged to move away from the path (17) upon bearing contact with a trunk.

## Description

The invention concerns a harvesting unit intended to be moved according to a longitudinal direction along at least one row of plants, as well as a harvesting machine comprising a motorized support structure on which such a harvesting unit is mounted.

The invention applies in particular to the technical domain of mechanical harvesting of fruits growing on plants, such as trees or bushes, that are arranged in rows, such as grapes, berries, coffee beans, olives, almonds, and in particular fruits of average caliber that grow on trees, such as apples, oranges and other citrus fruits, and other cultivated fruits.

Fruits are conventionally harvested by a harvesting machine comprising a motorized support structure which is movable along rows of plants, a harvesting unit being mounted on said structure for straddling at least one of said rows of plants and harvesting fruits from said plants. To that end, the harvesting unit includes a straddling chassis which delimits a harvesting tunnel into which the plants are successively introduced to move through said tunnel between respective openings at the front and at the rear of said tunnel.

To detach the fruit from the plants, harvesting units are known, which include a shaker system including two shaker devices, said shaker devices being arranged on respective sides of the harvesting tunnel to delimit said tunnel transversely.

Known harvesting machines may further include a recovery unit for conveying the flow of harvest obtained, which enables, possibly after cleaning and/or sorting, the storage thereof in at least one hopper provided for that purpose on the harvesting machine or in an ancillary trailer.

To prevent the harvested crop from falling on the ground, harvesting units are known, which further comprise a system for collecting the detached crop falling from the plants shaken by the shaking system.

In particular, documents WO-2002/01936, US-5 092 113 and FR-2 287 841 describes such harvesting units that comprises a collecting system with two collecting mats that are disposed under respectively one shaker device, as well as a conveyor system for evacuating the crop from the collecting mats, especially towards a recovery unit mounted in the motorized structure of the machine, as described hereinabove.

In these documents, each collecting mat is formed by a longitudinal alignment of collecting modules that longitudinally overlap on one another, and these collecting mats transversely overlap on one another at their inward edges to form therebetween a path for the passage of the trunks of the plants to be shaken.

The collecting modules of these documents have a disk shape geometry and comprise each a collecting member that presents an upper wall forming a part of the mat, said collecting member being arranged to move away from the path upon bearing contact with a trunk passing into said path.

For that purpose, these collecting members generally have an elastically deformable portion at least at their periphery, so that said annular periphery deforms upon bearing contact of its free end with the trunk of a plant passing into the path, and returns to its original shape after the passage of said trunk.

These solutions are not totally satisfactory, because the presence of the elastically deformable periphery confers to the upper wall of the collecting member a great deformability in a direction normal to said wall, and more specifically in a vertical direction. Thus, a fruit that falls on the periphery of a module has an important risk to pass through the mats and to be lost on the ground, and more specifically in the case of fruits of greater calibers, such as oranges or apples, and/or in the case of a crop with an important harvesting flow rate.

The invention aims to improve the prior art by proposing a harvesting unit equipped with a collecting system that is adapted to let the plants pass between its collecting mats while guaranteeing the collection of the crop falling from the shaken plants with a limited loss rate.

For that purpose, and according to a first aspect, the invention relates to a harvesting unit intended to be moved according to a longitudinal direction along at least one row of plants to harvest, said unit comprising a shaker system including two shaker devices arranged to be moved longitudinally on either side of said row of plants, a system for collecting the detached crop falling from the shaken plants, said collecting system comprising two collecting mats disposed under respectively one shaker device, and a conveying system for evacuating the crop from the collecting mats, each collecting mat being formed by a longitudinal alignment of collecting modules that longitudinally overlap on one another, said mats transversely overlapping on one another at their inward edges to form therebetween a path for the passage of the trunks of the plants, each collecting module comprising a collecting member that presents an upper wall forming a part of the corresponding mat, said collecting member being arranged to move away from the path upon bearing contact with a trunk passing into said path, each collecting module further comprising a reinforcing member of the upper wall against deformations thereof along a direction normal to said upper wall, said reinforcing member being arranged to move away from the path upon bearing contact with a trunk passing into said path.

According to a second aspect, the invention relates to a harvesting machine comprising a motorized support structure which is movable along at least one row of plants, as well as such a harvesting unit which is mounted on said support structure for detaching the crop from said plants.

Other aaspects and advantages of the invention will become apparent in the following description made with reference to the appended figures, wherein:
- figures 1a and 1b represent, respectively in a front and in a side view, a harvesting machine according to the invention;
- figure 2a represents, in a perspective view shown from above, a harvesting unit to be mounted on the machine of figures 1a, 1b on which the shaking system is omitted, figures 2b and 2c showing in a front view the same harvesting unit while oscillating in a pendulum manner around a longitudinal and horizontal axis within such a harvesting machine (not shown), and figure 2d showing said harvesting unit from above;
- figures 3a and 3b show in perspective the collecting mats of the collecting system of the harvesting unit of figures 2a, 2b, 2c and 2d, wherein the collecting modules are each represented respectively with (figure 3a) and without (figure 3b) their collecting members;
- figure 4 shows in partial longitudinal cross-section a collecting mat of figures 2a to 2d and 3a, 3b;
- figure 5 shows in front view the transverse overlapping of two collecting modules of two respective mats of the preceding figures;
- figures 6a and 6b show a collecting module of the preceding figures that is partially equipped with a driving mechanism in rotation, respectively in a perspective view from below (figure 6a) and in a perspective view from above, wherein the collecting member of said module is omitted (figure 6b);
- figure 7 shows, in perspective from above, the collecting mats of a collecting system according to another embodiment of the invention, figure 7a showing, in a perspective view from below, a collecting module of figure 7 without its connection to the driving mechanism in rotation;
- figures 8a, 8b, 8c and 8d show in different perspective views a segment of the collecting module of figures 7, 7a;
- figure 9 shows in perspective from above the conveying system that equips the harvesting units of figures 1a, 1b, and 2a to 2d;
- figure 10 shows in a front perspective view from above a collecting system and a conveying system according to respectively another embodiment of the invention;
- figure 11 shows, in a partial front perspective, a harvesting machine on which is mounted a harvesting unit equipped with the collecting and conveying systems of figure 10, the shaker system being omitted;
- figure 12 shows, in a view similar to figure 11, a harvesting machine with a collecting system according to another embodiment of the invention.

In relation to those figures, we describe below a harvesting unit intended to be moved according to a longitudinal direction along at least one row of plants to harvest, as well as a harvesting machine comprising a motorized support structure on which such a harvesting unit is mounted.

In the description, the spatial positioning terms are defined in relation to the direction of movement of the machine. In particular:
- the term "longitudinal" refers to a direction parallel to a direction of movement of the machine, and the term "transverse" refers to a direction perpendicular to said longitudinal direction;
- the terms "front" and "rear" refer to respectively the front part and the rear part of the machine according to said direction of movement;
- the terms "inward" and "outward" refer to positions that are located transversely respectively close to and away from a median vertical and longitudinal plan of the harvesting unit / machine as represented on the figures.

The harvesting machine is in particular arranged for the mechanical harvesting of fruits growing on plants, such as trees or bushes, that are arranged in rows, such as grapes, berries, coffee beans, olives, almonds, and in particular fruits of average caliber that grow on trees, such as apples, oranges and other citrus fruits, and other cultivated fruits.

To do so, the harvesting machine comprises a motorized support structure 1 that is equipped with a driver station 2 and that is movable along rows of plants to harvest, a harvesting unit 3 being mounted on said structure for straddling at least one of said rows of plants and detaching fruits from said plants.

In particular, the harvesting unit 3 can be mounted on the support structure 1 permanently or removably, so as to be replaceable by other equipment and accessories, for example spraying equipment, pruning equipment or equipment for working the soil.

The harvesting machine can comprise at least one hydraulic motor connected to wheels or tracks for enabling the movement of the support structure 1. In particular, as represented on the figures, the support structure 1 can be a tractor equipped with four driving and/or steering wheels 4 that are each coupled with a hydraulic motor that is provided with a closed loop hydrostatic transmission circuit.

In particular, the rotation speed of the hydraulic motors can be regulated by a control system with a flow rate proportional to the travelling speed of the support structure 1, said control system possibly being electronical and enabling to correct said rotation speed according to the variations of said travelling speed (speed reduction, differences between the travelling speed in uphill and downhill slopes, slipping).

As represented, the motorized support structure 1 is in the shape of an arch, with lateral vertical portions 1b and an upper horizontal portion 1c that delimits together a vault 1a, the harvesting unit 3 comprising a straddling chassis 5 with an upper part 5a that is adapted to be mounted below said vault 1a.

Advantageously, the chassis 5 of the harvesting unit 3 is mounted on the motorized support structure 1 in a pendulum manner about a horizontal and longitudinal axis A that is parallel to the direction of movement of said structure along the plants to harvest, so as to allow said chassis to straddle plants that are not perfectly aligned within their row, and then to harvest the fruits from said plants with a preserved efficiency despite this misalignment.

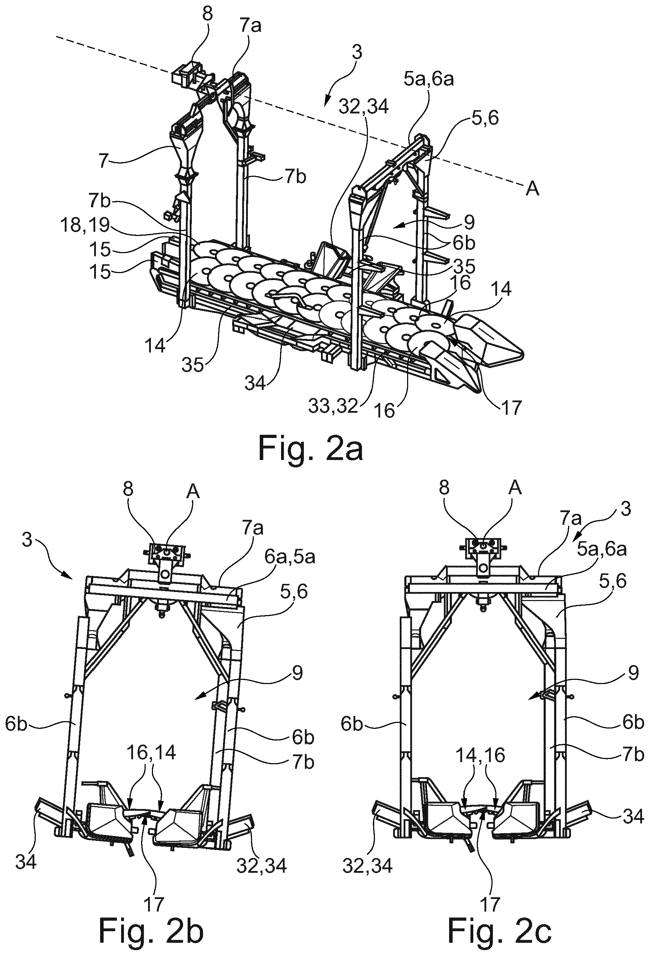

To do so, as represented on figures 2a, 2b and 2c, the straddling chassis 5 comprises respectively a front 6 and a rear 7 hoops with a reverse U-shaped geometry, that both comprise an upper horizontal branch 6a, 7a and two lower lateral and vertical posts 6b, 7b, the upper branches 6a, 7a being intended to be mounted below the vault 1a of the support structure 1, thus forming together the upper mounting part 5a of said chassis. Moreover, at least one of the upper branches 6a, 7b comprises an end part 8 with is mounted below the vault 1a with a rotational movement around the longitudinal and horizontal axe A.

The straddling chassis 5 delimits a harvesting tunnel 9 into which the plants are successively introduced to move through said tunnel between respective openings at the front and at the rear of said tunnel.

Moreover, the harvesting unit 3 includes a shaker system including two shaker devices 10, said shaker devices being arranged on respective sides of the harvesting tunnel 9 to delimit said tunnel transversely, so as to be moved longitudinally on either side of the row of plants to harvest.

Each shaker device 10 comprises a drum 11 that is mounted for rotation on the chassis 1 and that is operable to detach the crop form the plants introduced into the harvesting tunnel 9.

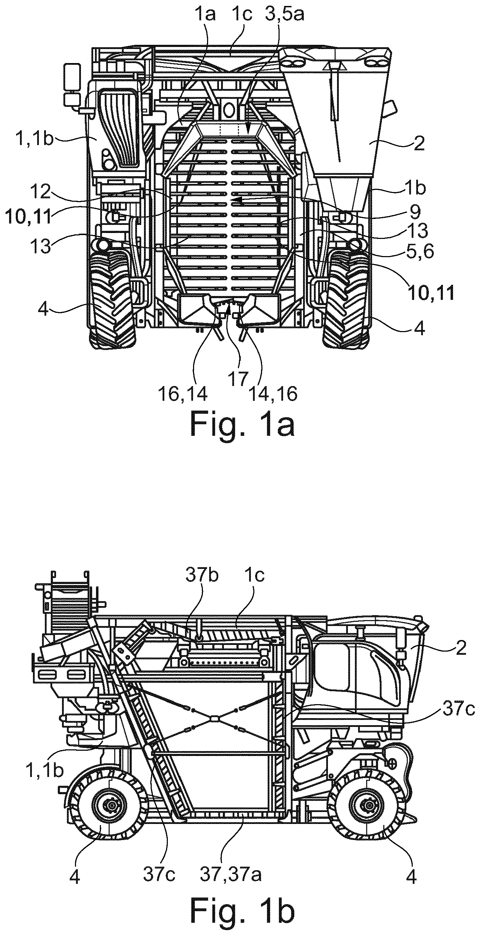

As represented on figure 1a, the drums 11 present a general cylindrical geometry and comprise each a drum shaft 12 mounted for rotation on the chassis 1 about a vertical axis, as well as several shaker organs 13 mounted to said drum shaft which extend sensibly horizontally and are vertically spaced from each other along said rotation axis, said shaker organs being driven for rotation by the drum shaft 12.

In particular, the shaker organs 13 extend along substantially the whole height of a drum 11, in order to optimize the shaking height, which enables to harvest in a satisfactory manner the fruits disposed on the whole height of the plants.

Moreover, each shaker organ 13 can be fixed to the shaft 12 in a reversible manner, in order to be replaceable by another shaker organ 13 with for example a different form and/or a different size, in accordance with the type of crop to be detached.

In a known manner, each shaker device 10 may further comprise:
- a rotational driving mechanism of their respective drum 11, said mechanism comprising a driven body and a first driving device engaged with said driven body to steer its rotation about the respective vertical axis of said drum;
- an oscillatory driving mechanism of their respective drum 11 about the respective vertical axis thereof, said mechanism comprising at least one eccentric module and a second driving device engaged with said module to steer its rotation, said module being drivingly connected to the corresponding drum shaft 12 by a mechanical member operable to transform the eccentric rotation of said module into an oscillation of said drum shaft;
said rotational and oscillatory driving mechanisms being both mounted on the upper part 5a of the straddling chassis 5.

The rotational driving mechanisms of the shaker devices 10 can be driven by hydraulic means that are integrated either directly into the hydrostatic transmission circuit for the movement of the support structure 1, or into an auxiliary transmission circuit that is independent and parallel to said movement transmission circuit, said hydraulic driving means being controlled in particular through a flow rate control that is proportional to the movement of the support structure 1.

The harvesting unit 3 further comprises a system for collecting the detached crop falling from the shaken plants, so as to avoid the loss said crop on the ground.

As represented in particular on figure 1a, the collecting system comprises two collecting mats 14 that are mounted on the chassis 5 so as to be disposed under respectively one shaker device 10, in order to mainly collect the crop that falls in the vicinity of said shaker device.

In the embodiments shown, the harvesting unit 3 comprises two horizontal longitudinal racks 15 that are mounted near respectively a pair of front 6b and rear 7b posts that are located on the same transverse side of the harvesting tunnel 9, each collecting mat 14 being formed by a longitudinal alignment of collecting modules 16 that are mounted along the corresponding rack 15 so to longitudinally overlap on one another, in order to avoid the passing of a falling fruit between two adjacent modules 16.

Moreover, the collecting mats 14 transversely overlap on one another at their inward edges to form therebetween a path 17 for the passage of the trunks of the plants to be harvested.

Each collecting module 16 comprises a collecting member 18 that presents an upper wall 19 forming a part of the corresponding mat 14, said collecting member being arranged to move away from the path 17 upon bearing contact with a trunk passing into said path.

Such an arrangement allows to create a space that is just large enough to let a trunk pass into the path 17, especially without damaging the plant, while avoiding the loss of harvested fruits by falling through said space. In particular, the collecting modules 16 are arranged so that their collecting members 18 return in their initial position, especially by a return transverse movement thereof towards the path 17, after the passage of a trunk, so as to reclose the space behind said trunk after said passage.

Each collecting module 16 further comprises a reinforcing member 20 of the upper wall 19 against deformations thereof along a direction that is normal to said upper wall, said reinforcing member being also arranged to move away from the path 17 upon bearing contact with a trunk passing into said path.

Thus, the reinforcing member 20 allows the collecting member 18 to resist normal deformations that may result from an impact thereon of a fruit falling by gravity from a shaken plant, especially at peripheral edges of the upper wall 19, so as to avoid said fruit to fall below said deformed wall and to be lost on the ground.

In the embodiments shown, the collecting members 18, as well as the reinforcing members 20, are each arranged to move away from the path 17 within a radial direction of the plan of the upper wall 19 upon bearing contact of their respective inward edge with a trunk passing into said path.

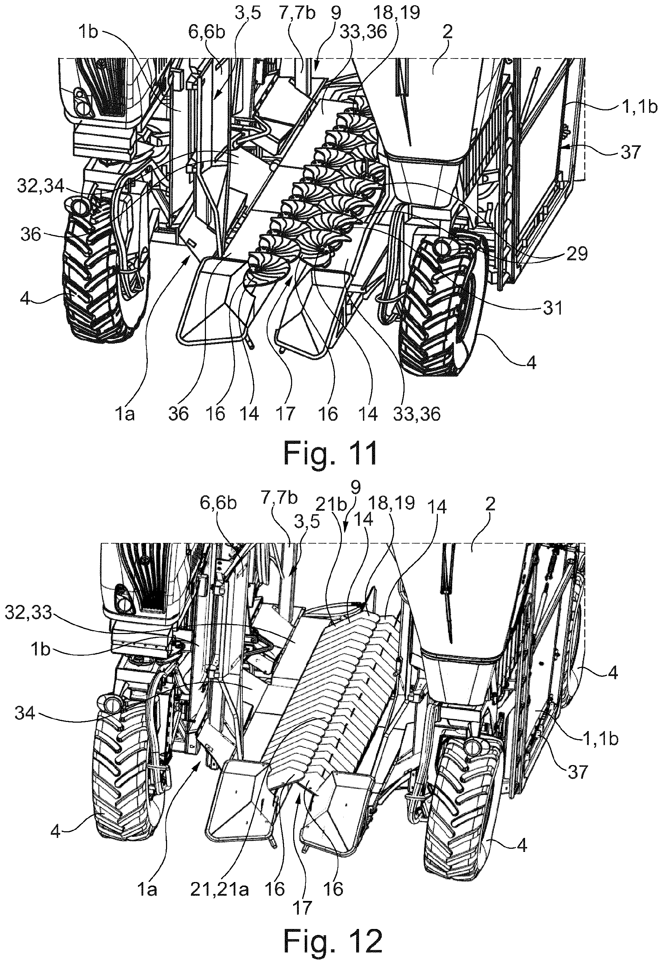

In the embodiment of figure 12, the collecting modules 16 each comprise a rigid plate 21, for example made of metal, that forms in a single piece the collecting member 18 and the reinforcing member 20, said plate presenting an inward 21a and an outward 21b portions that are inclined relative to one another, each outward portion 21 being mounted in rotation around an axis normal to the upper wall 19 on the corresponding rack 15, so as to allow the module 16 to transversely move away from the path 17 upon bearing contact of the inward portion 21a with a trunk.

Moreover, the collecting modules 16 are each equipped with return means (not shown) that are arranged to allow said modules to return by rotation to their initial position after the passage of a trunk, so as to reclose the path 17 behind said trunk.

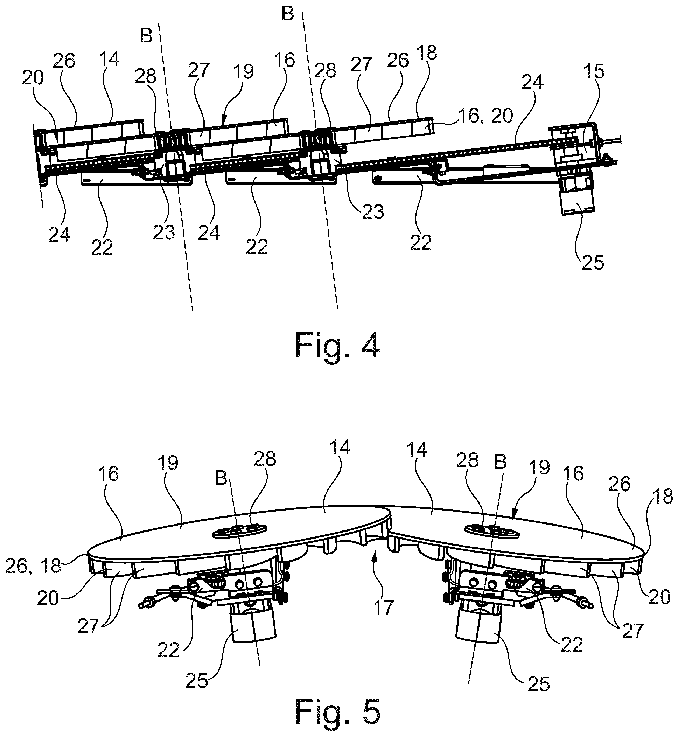

In the embodiments shown on figures 1a, 2a, 2b, 2c, 2d, 3a, 4, 5, 6a, 6b, 7 and 7a, each collecting module 16 presents a disk shape geometry around an axis B (represented on figures 4 and 5), said axis B being normal to the upper wall 19 of said collecting module.

In these embodiments, the harvesting unit comprises a driving mechanism in rotation of the collecting modules 16 around the axis B, so as to facilitate the evacuation of the collected.crop from the corresponding mat 14.

As represented on figures 4, 5 and 6a, each collecting module 16 is mounted on the corresponding rack 15 (not shown) by means of an adapted plate 22 that are are longitudinally aligned and equally spaced to one another along said rack, said module being further fixed at its center to a gear hub 23 that is mounted on said plate for rotation around the axis B.

Moreover, each rack 15 is equipped with a driving motor 25 that is arranged at a longitudinal end thereof, each gear hub 23 being connected by means of an endless chain 24 to the rotor of said motor (for the adjacent module 16) or to the gear hub 23 of the preceding module 16 to allow a rotational driving in chain of all modules 16.

Advantageously, the mechanism is arranged for driving the rotation of the modules 16 in a first direction, the rotation in the reverse direction being free for allowing the passage of trunks in the path 17.

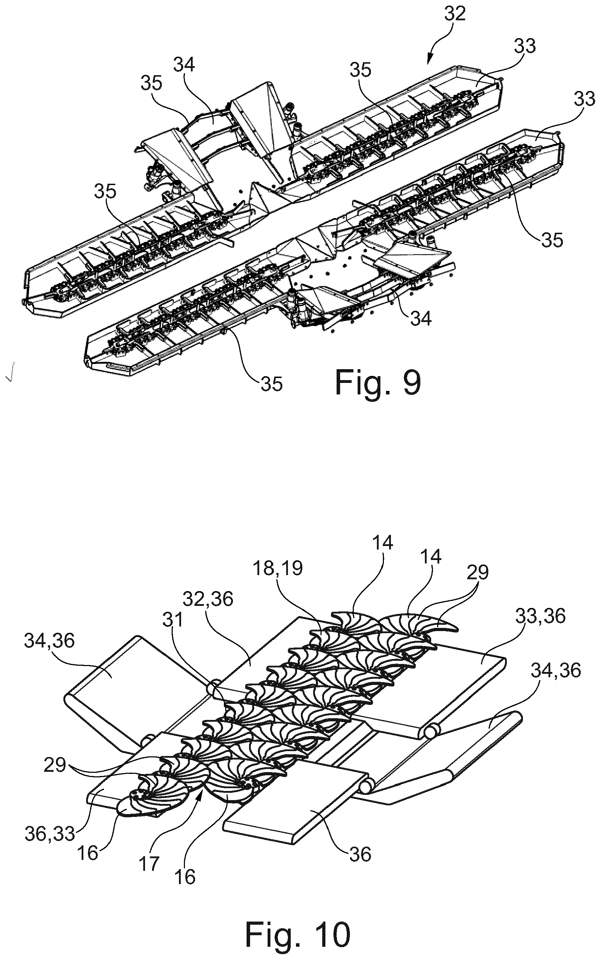

In the embodiment shown on figures 10 and 11, each collecting module has a partial-disk shape geometry around the axis B described hereinabove, and is mounted fixed in rotation around said axis B on the corresponding rack 15.

In relation to figures 2a, 2d, 3a, 3b, 4, 5, 6a and 6b, each collecting member 18 comprises a continuous layer 26 of deformable material, for example of rubber, onto which their upper wall 19 is formed.

Moreover, each reinforcing member 20 comprises a plurality of angular spaced blades 27 that are arranged under their layer 26, each blade 27 being made of a material having a normal rigidity that is greater than the one of said layer 26, and being elastically deformable to bend radially away from the path 17 upon bearing contact with a trunk passing into said path.

In particular, the blades 27 of a reinforcing member have each an arc-shaped geometry, which allows to facilitate their elastic deformation upon bearing contact with a trunk, as well as their elastical return to their rest position at the end of such bearing contact.

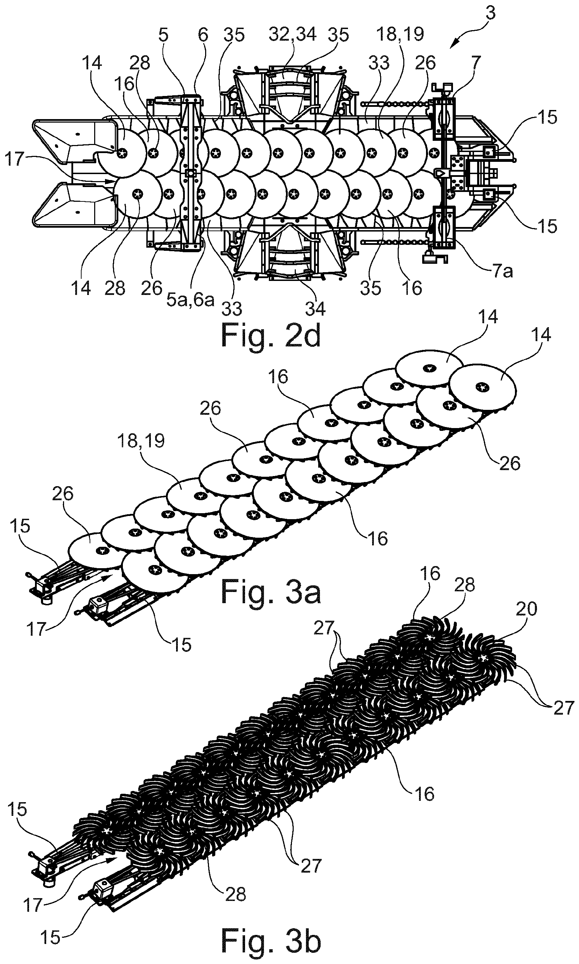

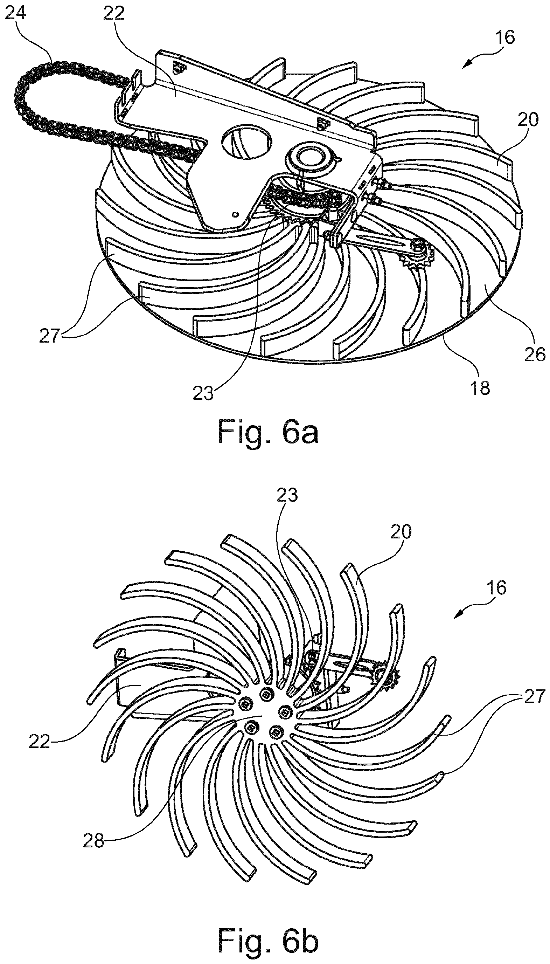

As represented more particularly on figures 3b and 6b, the blades 27 of a reinforcing member 20 are all formed in a single piece, and extend from a common hub 28 that is fixed by screwing on a gear hub 23 to allow the driving in rotation of the module 16.

Moreover, the continuous layer 26 is disposed around the common hub 28 while leaving free its fixation screws, so as to allow the disassembly of the module from the rack 15, for example for replacing a broken or defective module 16 in the mat 14.

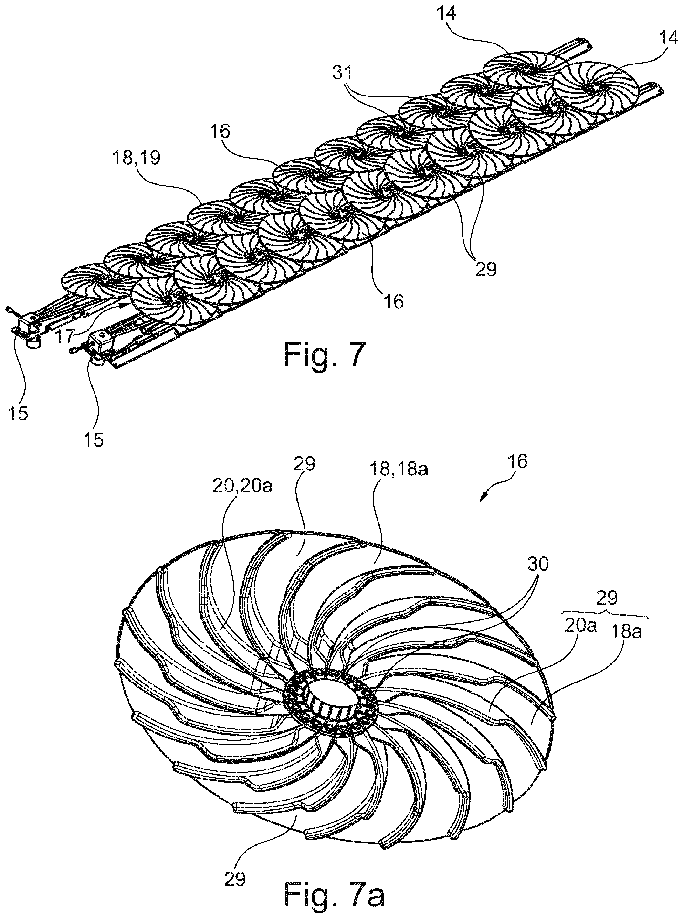

In the embodiments shown on figures 7, 7a, 10 and 11, each collecting module 16 comprises an angular repartition of a plurality of segments 29, either with a disk-shape geometry (figures 7, 7a) or with a partial-disk shape geometry (figures 10, 11), the segments 29 comprising each a portion 18a of collecting member 18 that are disposed angularly to form the upper wall 19 of the corresponding module 16, as well as a portion 20a of reinforcing member 20 of said portion of collecting member.

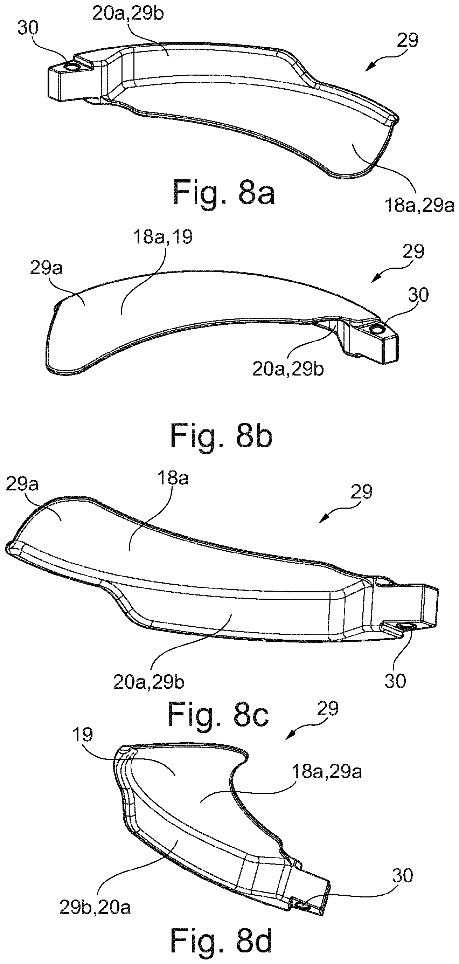

As represented in further details on figures 8a, 8b, 8c and 8d, each segment 29 is formed in a single piece, for example by injection molding of a plastic material, and present an upper plate 29a forming a portion 18a of collecting member and a lower blade 29b forming the reinforcing member of said portion 18a.

In particular, the reinforcing blade 29b each present an arc-shaped geometry and extend from a peripheral edge of the collecting member portion 18a, in a direction that is normal to portion of upper wall formed on said collecting member portion.

As represented on figures 7, 7a, the segments 29 each present a fixation hole 30 that is formed on an end of their respective reinforcing blade 29b, and are mounted by means of their fixation holes 30 on a common hub 31, so as to bend radially away from the path 17 upon bearing contact with a trunk passing into said path. Moreover, the common hub 31 may be mounted on a gear hub 23 as describes hereinabove, so as to be driven in rotation by means of a mechanism similar than that described in relation to figures 4, 5, 6a and 6b.

In particular, each of the segments 29 is able to bend radially independently in relation with its adjacent segments, for example by sliding under and/or above at least one of its two adjacent segments 29, upon bearing contact with a trunk.

The harvesting unit 3 further comprises a conveying system 32 for evacuating the crop from the collecting mats 14, especially for conveying said collected crop out of said harvesting unit, so as to allow further treatment and storage of said crop.

In the embodiments shown, the conveying system 32 comprise two longitudinal conveyors 33 that are disposed along the outward edge of respectively a collecting mat 14, so as to allow evacuation on said longitudinal conveyor of the crop collecting by said collecting mat.

Moreover, as represented on figures 2a, 2b, 2c, 3a, 5, 7, 10, 11 and 12, the modules 16 of each collecting map 14 is transversely sloped downwardly towards the adjacent longitudinal conveyor 33, so as to guide the crop collected by said map towards said longitudinal conveyor.

Advantageously, in the embodiments of figures 2a, 2b, 2c, 2d, 3a, 4, 5 and 7 wherein the modules 16 have a disk shape geometry and are driven in rotation by a motorized mechanism, the combination of the motorized rotation of said modules with their outward and transverse inclination orientation allows to facilitate even more the evacuation of the crop towards their adjacent conveyors 33.

In the figures, the conveying system 32 further comprises two transverse conveyors 34 that are disposed to be fed by respectively one longitudinal conveyor 33 to evacuate the crop out of the harvesting unit 3, said transverse conveyors being each inclined upwards and arranged near the middle section of the corresponding longitudinal conveyor 33.

On figures 2a, 2d and 9, at least one conveyor 33, 34, and preferably all the conveyors 33, 34 comprise each cleats 35 that are movable to guide the crop collected along said conveyor.

According to another embodiment, as represented on figures 10 to 12, each conveyor 33, 34 comprises rolling mats 36 to guide the crop collected along them.

In particular, the longitudinal conveyors 33 comprise each two cleat assemblies 35 or rolling mats 36 that are arranged to gather the collected crop in the middle section of said longitudinal conveyor, and the transverse conveyors 34 comprise each a cleat assembly 35 or a rolling mat 36 to evacuate the crop gathered at said middle section out of the harvesting unit 3.

The harvesting machine further comprises a recovery unit for conveying the crop harvested by the harvesting unit 3, as well as a unit for cleaning and/or sorting said harvested crop to eliminate therefrom components other than fruits, in particular leaves, leaf stalks and wood particles, before the storage of said harvest in at least one hopper provided for that purpose on the harvesting machine or in an ancillary trailer.

In relation to figures 1a, 1b, 11 and 12, the recovery unit comprises two conveyors 37 that are arranged on a respective lateral part 1b of the support structure 1, so as to be arranged downstream of respectively one transverse conveyor 34 of the harvesting unit 3, each recovery conveyor 37 being adapted to recover the crop coming from said transverse conveyor for further conveying said crop into the upper part 1c of said support structure, wherein a cleaning/sorting unit and at least one storing hopper may be mounted.

In particular, as represented on figure 1b, each recovery conveyor 37 forms a closed loop with a bottom run 37a arranged for recovering the collected crop by gravity underneath the adjacent transverse conveyor 34, a top run 37b for feeding the cleaning/sorting unit with said collected crop, and substantially vertical intermediate runs 37c which extends respectively between the front and rear ends of said top and bottom runs.

## Claims

1. Harvesting unit (3) intended to be moved according to a longitudinal direction along at least one row of plants to harvest, said unit comprising a shaker system including two shaker devices (10) arranged to be moved longitudinally on either side of said row of plants, a system for collecting the detached crop falling from the shaken plants, said collecting system comprising two collecting mats (14) disposed under respectively one shaker device (10), and a conveying system (32) for evacuating the crop from the collecting mats (14), each collecting mat (14) being formed by a longitudinal alignment of collecting modules (16) that longitudinally overlap on one another, said mats transversely overlapping on one another at their inward edges to form therebetween a path (17) for the passage of the trunks of the plants, each collecting module (16) comprising a collecting member (18) that presents an upper wall (19) forming a part of the corresponding mat (14), said collecting member being arranged to move away from the path (17) upon bearing contact with a trunk passing into said path, said harvesting unit being **characterized in that** each collecting module (16) further comprises a reinforcing member (20) of the upper wall (19) against deformations thereof along a direction normal to said upper wall, said reinforcing member being arranged to move away from the path (17) upon bearing contact with a trunk passing into said path.

2. Harvesting unit (3) according to claim 1, **characterized in that** each collecting member (18) is arranged to move away from the path (17) within a radial direction of the plan of the upper wall (19) upon bearing contact of its inward edge with a trunk passing into said path.

3. Harvesting unit (3) according to claim 1 or 2, **characterized in that** each collecting member (18) comprises a continuous layer (26) of deformable material onto which the upper wall (19) is formed, each reinforcing member (20) comprising a plurality of angular spaced blades (27) that are arranged under said layer, each blade (27) being made of a material having a normal rigidity greater than the one of the layer (26) and being elastically deformable to bend radially away from the path (17) upon bearing contact with a trunk passing into said path.

4. Harvesting unit (3) according to claim 3, **characterized in that** the blades (27) of a reinforcing member (20) have each an arc-shaped geometry.

5. Harvesting unit (3) according to claim 3 or 4, **characterized in that** the blades (27) of a reinforcing member (20) extend from a common hub (28), the continuous layer (26) being disposed around said hub.

6. Harvesting unit (3) according to claim 1 or 2, **characterized in that** each collecting module (16) comprises an angular repartition of a plurality of segments (29), the segments (29) comprising each a portion (18a) of collecting member that are disposed angularly to form the upper wall (19) of the corresponding module (16), and a portion (20a) of reinforcing member of said portion of collecting member.

7. Harvesting unit (3) according to claim 6, **characterized in that** the segments (29) are mounted on a common hub (31) so as to bend radially away from the path (17) upon bearing contact with a trunk passing into said path.

8. Harvesting unit (3) according to claim 7, **characterized in that** each of the segments (29) is able to bend radially independently in relation with its adjacent segments (29).

9. Harvesting unit (3) according to any of claims 1 to 8, **characterized in that** each collecting module (16) presents a disk shape geometry around an axis (B) that is normal to the upper wall (19) thereof.

10. Harvesting unit (3) according to claim 9, **characterized in that** it comprises a driving mechanism (23, 24, 25) in rotation of the collecting modules (16) around the axis (B) that is normal to the upper wall (19) thereof.

11. Harvesting unit (3) according to any of claims 1 to 8, **characterized in that** each collecting module (16) has a partial-disk shape geometry around an axis (B) that is normal to the upper wall (19) thereof.

12. Harvesting unit (3) according to any one of claims 1 to 11, **characterized in that** the conveying system (32) comprises two longitudinal conveyors (33) that are disposed along the outward edge of respectively a collecting mat (14), each collecting mat (14) being transversely sloped downwardly towards the adjacent conveyor (33) to guide the crop collected by said mat towards said conveyor.

13. Harvesting unit (3) according to claim 12, **characterized in that** the conveying system (32) comprises two transverse conveyors (34) that are disposed to be fed by respectively one longitudinal conveyor (33).

14. Harvesting machine comprising a motorized support structure (1) which is movable along at least one row of plants, as well as a harvesting unit (3) according to any of claims 1 to 13 which is mounted on said support structure for detaching the crop from said plants.

15. Harvesting machine according to claim 14, **characterized in that** the harvesting unit (3) is mounted on the motorized support structure (1) in a pendulum manner about a horizontal and longitudinal axis (A).
